# EUROPEAN PATENT SPECIFICATION

(11) **EP 0 775 837 B1**
(45) Date of publication and mention of the grant of the patent: **28.02.2001**
(21) Application number: 95120123.5
(22) Date of filing: 20.12.1995
(51) Int. Cl.: F16B 19/10

(54) **Blind fastener with deformable sleeve**
Blindniete mit verformbarer Hülse
Rivet aveugle avec douille déformable

(30) Priority: 23.11.1995 EP 95118401; 09.12.1995 EP 95119418
(43) Date of publication of application: 28.05.1997
(73) Proprietor: MONOGRAM AEROSPACE FASTENERS, Los Angelos, CA 90022 (US)
(72) Inventor: Stencel, Edgar L., Alta Loma, California 9737 (US); Krawiec, Paul P., Hacienda Heights, California 91745 (US)
(74) Representative: Witte, Alexander, Dr.-Ing.

(56) References cited:
- WO-A-95/23296
- DE-A- 2 754 910
- GB-A- 2 156 025

## Description

The invention relates to a blind fastener for inserting in aligned openings of first and second overlapping panels to secure them together, the overlapping panels defining a shear plane between them, the blind fastener comprising:
- a body having an axial bore therethrough, a head at an outer end thereof for engaging an outer one of said first and second overlapping panels, a conically shaped inner end, and an external cylindrical surface between the head and the conically shaped inner end, the external cylindrical surface to be positioned inside the aligned openings and across the shear plane of the overlapping panels upon setting of the fastener;
- a core bolt configured to pass through the axial bore of the body having a head at an outer end thereof, wherein the head of the bolt abuts the head of the body upon setting of the fastener, an externally threaded portion at an inner end thereof, and an intermediate unthreaded portion between the head and the threaded portion, the intermediate unthreaded portion to be positioned across the shear plane upon setting the fastener;
- a nut having a threaded bore for engaging the threaded portion of the core bolt; and
- a sleeve configured to fit around the core bolt having an outer end portion adjacent the conically shaped inner end of the body and an inner end portion that engages the nut, the sleeve being sufficiently deformable such that movement of the nut toward the body during setting of the fastener deforms the sleeve to a fully set condition in overlying contact with an inner one of said first and second overlapping panels, whereby the nut has an outer end.

A blind fastener of the afore-mentioned kind is disclosed in document WO 95/23296.

Blind fasteners are used in a variety of applications wherein access to the blind-side of panels being connected together is extremely limited or in some cases not possible. Various particular applications impose unique, stringent requirements for which the fastener must be particularly adapted. One of these applications is in the aerospace industry wherein the fasteners are required to securely fasten the panels, yet resist losing their clamping force during the service life of the aircraft. Hence, the fastener must be able to withstand the severe stresses and vibrations imposed upon them by the often harsh environment in which they are used without loosening.

One type of blind fastener is a three piece assembly having a threaded core bolt, a body and a sleeve. The body has a conical inner end and a threaded bore for receiving the core bolt. The core bolt has an enlarged head and a threaded stem for threadably engaging the body. The sleeve is unthreaded and located between the bolt head and the conical end of the body. The three piece assembly is inserted, bolt head first, into aligned openings of panels to be fastened together such that the bolt head, the sleeve and the conical end of the body are located inwardly of the blind side of the interior panel. The fastener may be set by rotating the core bolt, which causes axial movement of the bolt head and sleeve toward the panels. The outer end of the sleeve expands over the conical end of the body until it becomes seated firmly against the blind side of the interior panel. A further detailed description of this type of blind fastener is set forth in documents US 4,457,652, US 5,066,179 and US 5,238,342

While the above-described type of blind fastener functions quite well, it does have a disadvantage. In particular, the core bolt and body are threaded in the shear zone, i.e., the plane defined by the overlapping panels being fastened together, resulting in lower fatigue capabilities in both tension and shear loading of the fastener.

Another type of blind fastener overcomes the above problem. It is a three piece assembly having a core bolt, a body and a threaded sleeve. In this case, the body has an unthreaded bore for receiving the core bolt and the core bolt is threaded at its inner end only for receiving the threaded sleeve. Thus, the fastener is unthreaded in the shear zone improving its fatigue capabilities. The three piece assembly is inserted, sleeve first, through the aligned openings such that the sleeve, the threaded inner end of the core bolt, and the conical end of the body are located inwardly of the blind side of the interior panel. The fastener may then be set by rotating the core bolt, which causes axial movement of the sleeve toward the panels, bringing the sleeve into engagement with the blind side of the interior panel. A further detailed description of this type of blind fastener is set forth in documents US 2,971,425, US 3,063,329, US 3,345,900 and US4,579,491.

This second type of blind fastener has its own disadvantages. In particular, to work properly, the sleeve must be relatively soft at its end adjacent the blind side of the interior panel to permit its radial expansion over the conical end of the body, yet its other end must be hard to provide the necessary strength to prevent stripping during setting of the fastener. Requiring the sleeve to have both a soft portion and a hard portion, however, restricts the types of treatment that the sleeve may undergo, which would otherwise permit the sleeve as a whole to be made softer or harder. As a result, the tensile strength and yield strength of the fastener are not as great as they could 10 be and its fatigue capabilities are lower.

A further type of blind fastener is described in document WO 95/23296 mentioned at the outset. The fastener described therein is a four piece assembly that includes a body, a core bolt, a nut and a sleeve. The nut has a threaded bore for engaging a threaded portion of the core bolt. The nut also has an enlarged head at its inner end and a stem of reduced diameter at its outer end. Between the enlarged head and the stem is an annular shoulder. The sleeve is configured to fit around the core bolt and has a hard inner end portion that is fixed to the stem of the nut and a soft outer end portion that engages a conical inner end of the body. The fastener is set by rotating the core bolt. While this fastener has numerous advantages over the prior art, it has the disadvantage that the thread diameter of the nut is not sufficiently large to develop adequate tensile strength in some applications.

It is, therefore, an object underlying the invention to provide a blind fastener having a deformable sleeve that has increased strength, but which is still relatively easy to make and simple to install.

This object is achieved by a blind fastener as specified at the outset and being characterized in that the outer end of the nut abuts the inner end of the sleeve without entering a bore of the sleeve.

The present invention is embodied in a blind fastener having relatively high fatigue capabilities in both tension and shear loading. The blind fastener of the present invention may be installed in aligned openings of first and second overlapping panels to secure them together, the overlapping panels defining a shear plane between them. The blind fastener itself includes a body, a core bolt, a nut and a sleeve. The body has an axial bore therethrough and a conical inner end that may be knurled around its circumference. The core bolt is configured to pass through the axial bore of the body and has an externally threaded portion at its inner end. When installed, the body and the core bolt both have unthreaded portions that are positioned across the shear plane. The nut of the blind fastener has a threaded bore for engaging the threaded portion of the core bolt. The deformable sleeve of the blind fastener is configured to fit around the core bolt and is located between the nut and the conical inner end of the body.

A feature of the present invention is that the sleeve and nut, because they are distinct pieces, may be separately treated to improve their desired characteristics. For example, the nut may be heat treated and tempered to improve its hardness while the sleeve may be fully annealed to make it softer and more ductile.

Another feature of the present invention is that an inner end portion of the sleeve may be cold worked or otherwise hardened to increase its hardness and tensile yield strength. This results in the inner end portion of the sleeve having a greater resistance to buckling under compression loading from the nut.

A further feature of the present invention is that the inner end of the sleeve abuts the outer end of the nut without the nut entering inside the bore of the sleeve. In addition, the inside diameter and the wall thickness of the sleeve and nut at their abutting ends are preferably the same. An advantage of this feature is that the inside diameter of the nut is increased and therefore a greater tensile strength may be developed during setting.

Yet another feature of the invention is that the inner end of the sleeve and/or the outer end of the nut may be knurled to provide a locking fit therebetween to ease assembly of the fastener and to ensure that the sleeve and nut are fixed together during setting.

Other features and advantages of the present invention will become apparent from the following description of the preferred embodiments, taken in conjunction with the accompanying drawings, which illustrate, by way of example, the principles of the invention.

FIG. 1 is an exploded perspective view of a blind fastener according to the present invention.

FIG. 2 is a longitudinal view, partially in section, of an assembled blind fastener according to the present invention.

FIG. 3 is a longitudinal view, partially in section, of the blind fastener of FIG. 2, showing the fastener after it has been fastened to two panels.

FIG. 4 is a longitudinal view, partially in section, of a sleeve according to the present invention.

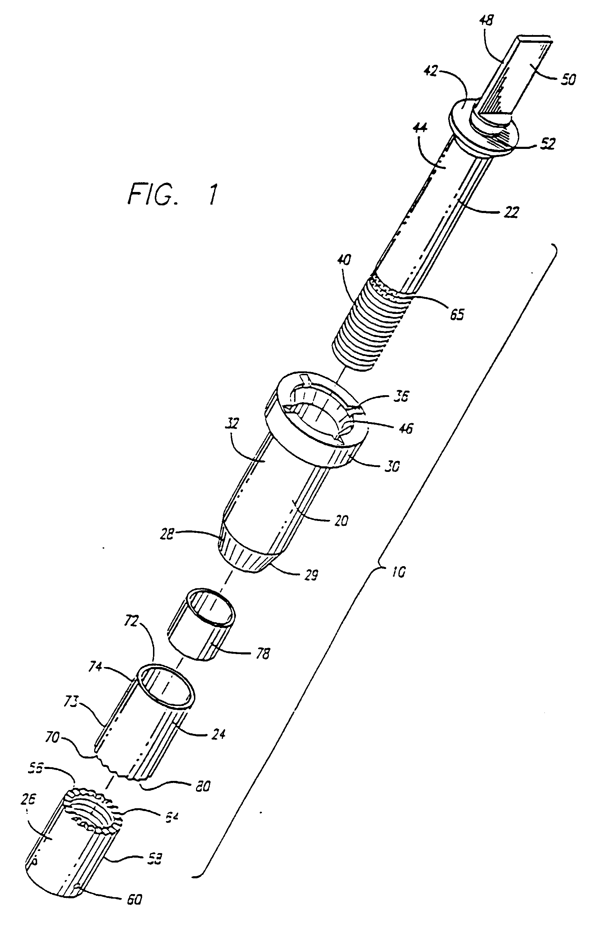

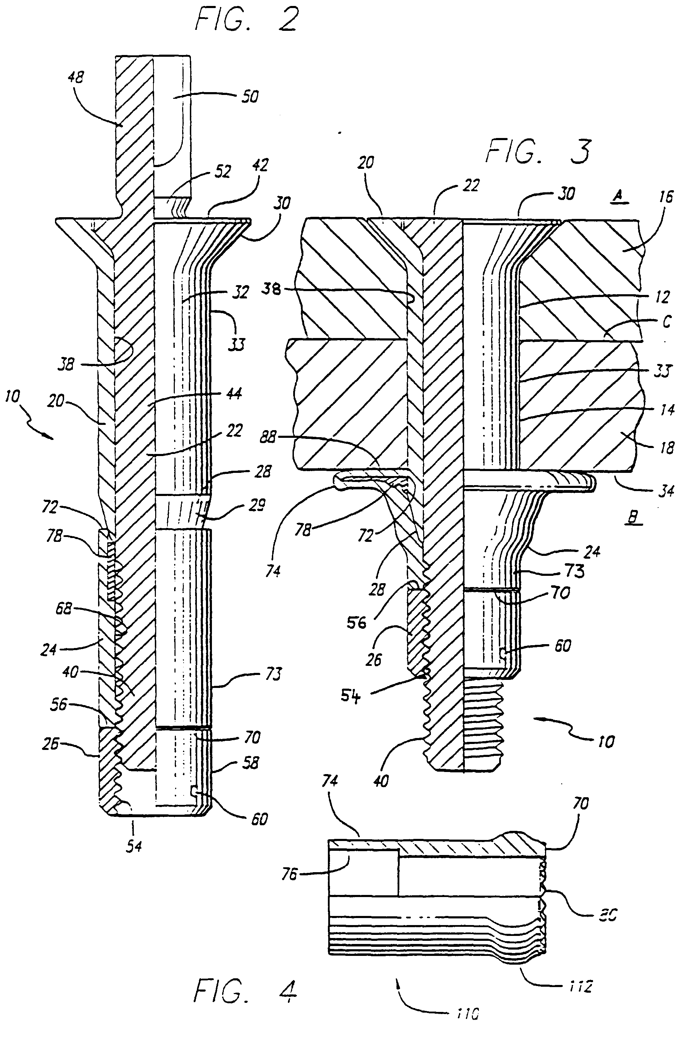

A blind fastener 10 according to the present invention is shown in FIGS. 1-3. The blind fastener 10 may be inserted through aligned openings 12, 14 in outer and inner overlapping panels 16, 18 to secure them together (FIG. 3). As is typical of blind fasteners, the fastener 10 is installed and set from the space A adjacent the outer panel 16, the space B adjacent the inner panel being inaccessible. The panels engage each other along a shear plane C therebetween.

The blind fastener 10 includes a body 20, a core bolt 22, a sleeve 24 and a nut 26. The body 20 of the fastener may be made of titanium alloy or stainless steel and includes a tapered or conically shaped inner end 28 having a knurled exterior surface 29, an outer end having a head 30 and an intermediate portion 32 between the conical inner end 28 and the head 30. The intermediate portion has a cylindrical exterior surface 33. The body is configured such that when installed, the cylindrical exterior surface 33 forms a tight fit in the aligned openings 12, 14 of the panels 16, 18, the head 30 seats against the outer panel 16, and the conical inner end 28 is located on the blind side of the panels adjacent an interior surface 34 of the inner panel 18.

The head 30 may be frusto-conical and countersunk into the outer panel 16 and may be provided with suitable notches 36 for the reception of a tool for preventing rotation of the body 20, such a configuration for the head 30 being particularly advantageous where a flush outer surface for the body is desired. Various other configurations for the head may also be employed. For example, the body may be provided with a standard hexagonal head having flats engageable by a suitable tool.

The body 20 is provided with an unthreaded axial bore 38 for receiving the core bolt 22, which is longer than the body so that it extends therethrough. The core bolt may be made of titanium alloy or stainless steel and includes a threaded inner end 40, a head 42 and an unthreaded intermediate portion 44. The threaded inner end 40 projects inwardly beyond the conical inner end 28 of the body. The unthreaded intermediate portion 44 of the core bolt may have a greater diameter than the threaded inner end 30 of the core bolt to provide a greater shear strength in the shear zone.

The bolt head 42 is adapted to seat on an annular, outwardly facing bolt head seat 46 in the head 30 of the body. The bolt head 42 also includes a stem 48 provided with a pair of wrenching flats 50 adapted to engage the rotary wrench bit of an installation tool (not shown). An annular break off groove 52 may be provided, which is adapted to fracture when a pre-selected stress is applied to the stem 48 during the setting of the blind fastener. Such fracture is designed to occur when the break off groove is located flush with or slightly into the space A adjacent the outer panel 16.

It will be appreciated that while a particular bolt head configuration is disclosed, various other bolt head configurations may be utilized. For example, a hex head may be substituted for the wrenching flats or the bolt head may be provided with screwdriver slots, tool receiving notches, or the like.

Threaded on the inner end 40 of the core bolt 22 is the nut 26. The nut may be made of titanium alloy or stainless steel. Preferably, the nut is heat treated and tempered or otherwise treated to increase its hardness and strength. In situations where the space B on the blind side of the panels is limited, a relatively short nut in length will be necessary. Such a nut may be specially treated as necessary to give it the strength and hardness characteristics required.

The nut 26 includes an internally threaded bore 54 and an outer end 56 that may be knurled at 64. Preferably, a cylindrical outer surface 58 having a plurality of indentations 60 around its periphery that are configured to create a radial deformation in the nut threads to effect an interference fit between the pitch diameters of the threads of the core bolt and the nut so that the nut will not back off after setting of the fastener, even under conditions of severe vibration, and the like. Alternatively, the nut may be deformed into a slightly elliptical or triangular cross-sectional configuration, although other configurations may be utilized. One or more threads of the core bolt may be knurled at 65 to assist in locking the nut to the core 30 bolt as the fastener is set.

Located between the nut 26 and the conical inner end 28 of the body 20 is the sleeve 24. Preferably, the sleeve is made from titanium alloy or stainless steel and is fully annealed or otherwise treated to make it soft and ductile. The sleeve has an unthreaded bore 68, an inner end 70 that engages the nut and an outer end 72 that engages the conical inner end 28 of the body. An outer end portion 74 of the sleeve may also include an annular recess 76 for receiving an annular insert 78 (see also FIG. 4). The insert is preferably made of a material having a lower tensile strength than the outer portion of the sleeve, such as Delrin, Celcon, Teflon, Nylon, fiberglass reinforced versions of the above or softened metal. The function of the insert will be described in more detail later. The inner end 70 of the sleeve is preferably knurled at 80 so that it becomes locked to the nut during assembly and/or setting. In addition, the outer diameter and/or thickness of the sleeve at its inner end are preferably the same as that of the outer end of the nut.

Preferably, an inner end portion 73 of the sleeve is cold worked or otherwise hardened prior to assembly. This may be accomplished, for example, by providing a sleeve 110 with a bulbed or bulged end portion 112 (see FIG. 4). The sleeve 110 is then placed on a mandrel (not shown) and forced through a die, which causes the bulbed end portion to be cold worked as it is squeezed down to the diameter of an adjacent portion of the sleeve. Lubricating the sleeve and mandril will facilitate removal of the sleeve from the mandril after the process is completed.

The preferred assembly of the blind fastener 10 of the present invention will now be described. First, the fastener is assembled as shown in FIG. 2 with the nut 26 sufficiently threaded onto the core bolt 22 such that the knurled portions 64,80 of the sleeve and nut are engaged and the outer end 72 of the sleeve 24 engages the knurling 29 on the body 20. This insures that the nut and the core bolt will not turn together upon rotation of the core bolt. Preferably, the inner end portion 73 of the sleeve is crimped around the core bolt such that the knurling of the sleeve and nut firmly engage each other.

The assembled fastener is then inserted, nut first, through the aligned openings 12, 14 of the overlapping panels 16, 18 with the head 30 of the body 10 firmly seated against the outer panel 16. Suitable tools are applied to the head of the body and to the bolt stem 48, or suitable components of a single tool are applied as appropriate. By means of such a tool or tools, the body 20 is prevented from rotating and the 15 core bolt 22 is rotated. This rotation of the core bolt causes axial movement of the nut 26 toward the body. As the nut is moved axially toward the body in response to the rotation of the core bolt, the annular insert 78 and the outer end portion 74 of the sleeve expand over the conical inner portion 28 of the body and over the adjacent cylindrical exterior surface 33 of the body until the outer end 72 of the sleeve is firmly seated against the interior surface 34 of the inner panel 18.

As described in U.S. Patent No. 4,457,652, the insert 78 causes the sleeve to buckle radially outward upon contact with the inner panel to form a large bearing surface 88. In particular, upon the core bolt 22 continuing to be drawn into the body 20, the insert 78 and the outer end portion 74 of the sleeve proceed 30 over the body. However, because of the stress applied by the higher tensile strength outer end portion of the sleeve to the lower tensile strength insert, the outer end 72 of the outer end portion of the sleeve tapers inwardly toward the exterior surface 33 of the body.

Consequently, the interior of the sleeve does not conform to the exterior surface of the body, but rather assumes a buckling mode. Consequently, as shown in FIG. 3, upon contact with the blind side of the inner panel, the outer end portion of the sleeve buckles radially outward without substantial pressure being applied by the outer end 72 of the sleeve to the blind side of the inner panel and with a uniform large bearing surface 88 approximately circular in shape.

Once the outer end portion of the sleeve has been brought into firm engagement with the interior surface of the inner panel to clamp the panels between the nut and the head 30 of the body, further rotation of the core bolt results in failure thereof at the break off groove 52 in torsional shear, thereby providing a flush structure for the core bolt relative to the body. The hereinbefore described thread lock structure 60 for the nut and the core bolt effects an interference fit between the pitch diameters of the threads on the nut 20 and the core bolt to prevent loosening of the nut even under conditions of severe vibration or the like.

It should be appreciated from the foregoing description that the present invention provides an improved blind fastener that has relatively high fatigue capabilities in both tension and shear loading. Although the invention has been described in detail with reference only to the preferred embodiments, those having ordinary skill in the art will appreciate that various modifications can be made without departing from the invention. Accordingly, the invention is defined with reference to the following claims.

## Claims

1. A blind fastener for inserting in aligned openings (12, 14) of first and second overlapping panels (16, 18) to secure them together, the overlapping panels (16, 18) defining a shear plane (C) between them, the blind fastener (10) comprising:
- a body (20) having an axial bore (38) therethrough, a head (30) at an outer end thereof for engaging an outer one (16) of said first and second overlapping panels (16, 18), a conically shaped inner end (28), and an external cylindrical surface (33) between the head (30) and the conically shaped inner end (28), the external cylindrical surface (33) to be positioned inside the aligned openings (12, 14) and across the shear plane (C) of the overlapping panels (16, 18) upon setting of the fastener (10);
- a core bolt (22) configured to pass through the axial bore (38) of the body (20) having a head (42) at an outer end thereof, wherein the head (42) of the bolt (22) abuts the head (30) of the body (20) upon setting of the fastener, an externally threaded portion (40) at an inner end thereof, and an intermediate unthreaded portion (44) between the head (42) and the threaded portion (40), the intermediate unthreaded portion (44) to be positioned across the shear plane (C) upon setting the fastener (10);
- a nut (26) having a threaded bore (54) for engaging the threaded portion (40) of the core bolt (22); and
- a sleeve (24) configured to fit around the core bolt (22) having an outer end portion (74) adjacent the conically shaped inner end (28) of the body (20) and an inner end portion (73) that engages the nut (26), the sleeve (24) being sufficiently deformable such that movement of the nut (26) toward the body (20) during setting of the fastener (10) deforms the sleeve (24) to a fully set condition in overlying contact with an inner one (18) of said first and second overlapping panels (16, 18),
whereby the nut (26) has an outer end (56), characterized in that the outer end (56) of the nut (26) abuts the inner end (70) of the sleeve (24) without entering a bore (68) of the sleeve (24).

2. The blind fastener of claim 1, characterized in that the inside diameter of the outer end (56) of the nut (26) is at least as great as the inside diameter of the inner end (70) of the sleeve (24).

3. The blind fastener of claim 1 or 2, characterized in that the inner end (70) of the sleeve (24) and the outer end (56) of the nut (26) have the same thickness.

4. The blind fastener of any of claims 1 through 3, characterized in that the inner end portion (73) of the sleeve (24) engages a knurled portion (64) of the nut (26).

## Patentansprüche

1. Blindniet zum Einsetzen in miteinander fluchtende Öffnungen (12, 14), die sich in einander überlappenden ersten und zweiten Tafeln (16, 18) befinden und zum sicheren Verbinden derselben miteinander, wobei die einander überlappenden Tafeln (16, 18) zwischen sich eine Scherebene (C) definieren, und der Blindniet (10) aufweist:
- einen Körper (20), mit einer durch ihn hindurch verlaufenden axialen Bohrung (38), mit einem Kopf (30) an einem äußeren Ende des Körpers (20), der an der äußeren der ersten und zweiten Tafel (16, 18) anliegt, mit einem kegelig geformten inneren Ende (28), und mit einer äußeren zylindrischen Oberfläche (33) zwischen dem Kopf (30) und dem kegelig geformten inneren Ende (28), wobei die äußere zylindrische Oberfläche (33) beim Setzen des Blindniets (10) in den miteinander fluchtenden Öffnungen (12, 14) und über die Scherebene (C) hinweg positioniert wird;
- eine innere Schraubstange (22) zum Einführen in die axiale Bohrung (38) des Körpers (20), mit einem Kopf (42) an ihrem äußeren Ende, wobei der Kopf (42) der Schraubstange (22) beim Setzen des Blindniets (10) an den Kopf (30) des Körpers (20) angrenzt, mit einem Außengewindeabschnitt (40) an ihrem inneren Ende, und mit einem mittleren, gewindelosen Abschnitt (44) zwischen dem Kopf (42) und dem Außengewindeabschnitt (40), wobei der mittlere, gewindelose Abschnitt (44) beim Setzen des Blindniets (10) über die Scherebene (C) hinweg positioniert wird;
- eine Mutter (26) mit einer Gewindebohrung (54) zum Eingriff mit dem Gewindeabschnitt (40) der Schraubstange (22); und
- eine Hülse (24) zum Umschließen der Schraubstange (22), mit einem äußeren Endabschnitt (74) neben dem konisch geformten inneren Ende (28) des Körpers (20), und mit einem inneren Endabschnitt (73), der mit der Mutter (26) in Eingriff steht, wobei die Hülse (24) ausreichend verformbar ist, derart, daß beim Setzen des Blindniets (10) eine Bewegung der Mutter (26) auf den Körper (20) zu die Hülse (24) in einen vollständig gesetzten Zustand verformt, in dem sie in überlappendem Kontakt mit einer inneren der ersten und der zweiten Tafel (16, 18) steht, und wobei die Mutter (26) ein äußeres Ende (56) aufweist,
dadurch gekennzeichnet, daß das äußere Ende (56) der Mutter (26) an das innere Ende (70) der Hülse (24) angrenzt ohne in die Bohrung (68) der Hülse (24) einzudringen.

2. Blindniet nach Anspruch 1, dadurch gekennzeichnet, daß der Innendurchmesser des äußeren Endes (56) der Mutter (26) mindestens so groß wie der Innendurchmesser des inneren Endes (70) der Hülse (24) ist.

3. Blindniet nach Anspruch 1 oder 2, dadurch gekennzeichnet, daß das innere Ende (70) der Hülse (24) und das äußere Ende der Mutter (26) die selbe Dicke haben.

4. Blindniet nach einem der Ansprüche 1 bis 3, dadurch gekennzeichnet, daß der innere Endabschnitt (73) der Hülse (24) an einem gerändelten Abschnitt (64) der Mutter (26) anliegt.

## Revendications

1. Rivet aveugle destiné à être inséré dans des ouvertures alignées (12, 14) de premier et second panneaux se recouvrant (16, 18) afin de les fixer ensemble, les panneaux se recouvrant (16, 18) définissant un plan de coupe (C) entre eux, le rivet aveugle (10) comportant :
- un corps (20) ayant un alésage axial (38) traversant, une tête (30) à une extrémité extérieure de celui-ci destinée à venir en prise avec le panneau extérieur (16) desdits premier et second panneaux se recouvrant (16, 18), une extrémité intérieure ayant une forme conique (28), et une surface cylindrique extérieure (33) située entre la tête (30) et l'extrémité intérieure de forme conique (28), la surface cylindrique extérieure (33) devant être positionnée à l'intérieur des ouvertures alignées (12, 14) et à travers le plan de coupe (C) des panneaux se recouvrant (16, 18) lors du montage du rivet (10) ;
- une goupille métallique (22) configurée pour passer à travers l'alésage axial (38) du corps (20), ayant une tête (42) à une extrémité extérieure de celle-ci, la tête (42) de la goupille (22) venant en butée contre la tête (30) du corps (20) lors du montage du rivet, une partie filetée extérieurement (40) à une extrémité intérieure de celle-ci, et une partie non-filetée intermédiaire (44) située entre la tête (42) et la partie filetée (40), la partie non-filetée intermédiaire (44) devant être positionnée à travers le plan de coupe (C) lors du montage du rivet (10) ;
- un écrou (26) ayant un alésage fileté (54) destiné à venir en prise avec la partie filetée (40) de la goupille métallique (22) ; et
- un manchon (24) configuré pour s'agencer autour de la goupille métallique (22), ayant une partie d'extrémité extérieure (74) adjacente à l'extrémité intérieure ayant une forme conique (28) du corps (20), et ayant une partie d'extrémité intérieure (73) qui vient en contact avec l'écrou (26), le manchon (24) pouvant être suffisamment déformé, de telle sorte qu'un déplacement de l'écrou (26) en direction du corps (20) lors du montage du rivet (18) déforme le manchon (24) jusqu'à un état pleinement monté, dans un contact recouvrant le panneau intérieur (18) desdits premier et second panneaux se recouvrant (16, 18), de sorte que l'écrou (26) a une extrémité extérieure (56), caractérisé en ce que l'extrémité extérieure (56) de l'écrou (26) vient en butée contre l'extrémité intérieure (70) du manchon (24) sans entrer dans un alésage (68) du manchon (24).

2. Rivet aveugle selon la revendication 1, caractérisé en ce que le diamètre intérieur de l'extrémité extérieure (56) de l'écrou (26) est au moins aussi grand que le diamètre intérieur de l'extrémité intérieure (70) du manchon (24).

3. Rivet aveugle selon la revendication 1 ou 2, caractérisé en ce que l'extrémité intérieure (70) du manchon (24) et l'extrémité extérieure (56) de l'écrou (26) ont la même épaisseur.

4. Rivet aveugle selon l'une quelconque des revendications 1 à 3, caractérisé en ce que la partie d'extrémité intérieure (73) du manchon (24) vient en contact avec une partie moletée (64) de l'écrou (26).
